Europäisches Patentamt

European Patent Office

Office européen des brevets

(19)

(11) Numéro de publication: **0 078 186**
A1

(12) # DEMANDE DE BREVET EUROPEEN

(21) Numéro de dépôt: **82401852.7**

(22) Date de dépôt: **08.10.82**

(51) Int. Cl.³: **A 23 K 1/04**
**A 23 K 1/18, A 23 J 3/00**

(30) Priorité: **08.10.81 FR 8119138**

(43) Date de publication de la demande:
**04.05.83 Bulletin 83/18**

(84) Etats contractants désignés:
**AT BE CH DE GB IT LI LU NL SE**

(71) Demandeur: **De Rouville, Guy**

**F-81330 Vabre(FR)**

(71) Demandeur: **Quentin, Henri**
**6 rue Pasteur**
**F-81230 Lacaune(FR)**

(72) Inventeur: **De Rouville, Guy**

**F-81330 Vabre(FR)**

(72) Inventeur: **Quentin, Henri**
**6 rue Pasteur**
**F-81230 Lacaune(FR)**

(74) Mandataire: **Ravina, Bernard**
**CABINET Bernard RAVINA 44 Avenue Léon Blum**
**F-31500 Toulouse(FR)**

(54) **Nouvel aliment pour animaux à tendance carnassière.**

(57) La présente invention a pour objet un nouvel aliment pour animaux à tendance carnassière.

L'aliment selon l'invention, réalisé à partir de sang d'abattoir se caracterise essentiellement en ce qu'il est réalisé à prtir de sang liquide, que le dit sang liquide subit un traitement conservateur au moyen d'un produit anti-oxydant, puis l'élimination partielle de la quantité excédentaire d'au moins l'un des éléments stabilisateur du produit albuminoïde et de produits alimentaires sec rééquilibrés en éléments nécessaires aux besoins nutritionnels que le dit produit présente un taux élevé d'humidité et qu'il est contenu stérile après cuisson dans une gaine étanche.

Application: alimentation animale.

EP 0 078 186 A1

NOUVEL ALIMENT POUR ANIMAUX A TENDANCE CARNASSIERE.    **0078186**

La présente invention concerne un nouveau type d'aliment pour animaux domestiques à tendance carnivore tels que par exemple les chiens et les chats et animaux de compagnie et son procédé de fabrication.

Les aliments pour animaux connus sont essentiellement constitués à partir de déchets d'abattoirs tels que des sous produits des industries de la viande additionnés de légumes ou céréales recdvant des éléments nutritionnels indispensables tels que vitamines ou autres.
Ces aliments pour animaux connus sont généralement présentés sous trois formes : humide, semi-humide et sèche.

Les aliments dits humides ont un taux d'humidité compris approximativement et selon la composition entre 40 % et 50 %.
Ces aliments sont généralement bien acceptés par les animaux, car agréables au palais.

Cependant, leur indispensable stabilité microbienne nécessite, compte tenu du fort taux d'humidité, leur emballage en boîtes appertisées, ce qui entraîne le passage par une chaîne de mise en boîtes, sertissage et appertisation qui rend ces aliments coûteux.
Les produits dits semi-humides, dont le taux d'humidité est de l'ordre de 14 % à 40 % sont classés comme des semi-conserves préemballés sous vide, qui doivent nécessairement, de la fabrication à l'utilisateur passer par la chaîne du froid, ce qui grève leur coût, constitue un inconvénient et peut restreindre leur usage.
Les aliments secs sont des produits dont le taux d'humidité est de l'ordre de 14 %.
Ces aliments ne posent pas de difficultés de stockage, ce sont généralement des produits tels que des croquettes ou boulettes qui sont trempées au moment de l'usage, de ce fait, ils sont assez bien acceptés par les animaux.
Cependant, la dessication des produits de base entraîne un coût important à la fabrication notamment au niveau du poste consommation d'énergie.
On ne connaît pas actuellement dans l'alimentation animale un produit à fort taux d'humidité et de longue conservation, susceptible de se

Parmi les déchets d'abattoirs susceptibles d'être utilisés pour la fabrication des aliments pour animaux, le sang d'abattoir est un des plus disponibles en quantité.

De plus, c'est un produit qui a une valeur très faible en coût puisqu'il est rejeté à l'égout moyennant le paiement d'une taxe, ou que les abattoirs doivent payer son enlèvement.

Actuellement, le sang d'abattoir est considéré comme un élément de pollution alors qu'il présente un pourcentage de protéïnes nobles qu'il serait intéressant d'utiliser.

Dans le domaine de l'alimentation animale, lorsque le sang d'abattoir est utilisé, c'est après un traitement destiné à le décolorer ou à le désodoriser et toujours à le réduire en poudre, car le sang frais se dégrade très rapidement.

Compte tenu du coût élevé de ces opérations, il est compréhensible que l'usage du sang d'abattoir ne se soit pas répandu.

La présente invention vise à obvier aux inconvénients ci-dessus et a en fait tiré parti de ces contraintes ou opportunités en réalisant à partir du sang d'abattoir et selon un procédé nouveau un proudit alimentaire humide et donc appétent, de fabrication simple et qui se conserve hors de la chaîne du froid pendant une longue période qui peut être par exemple de plus de cent jours.

A cet effet, le nouvel aliment pour animaux à tendance carnassière tels que chiens et chats, selon la présente invention, réalisé à partir de sang d'abattoir, se caractérise essentiellement en ce qu'il est réalisé à partir de sang liquide, que le dit sang liquide subit un traitement conservateur au moyen d'un produit anti-oxydant puis l'élimination partielle de l'un des éléments stabilisateur du produit anti-oxydant après adjonction d'un produit albuminoïde et de céréales rééquilibrées en éléments nécessaires aux besoins nutritionnels, que le dit produit présente un taux d'humidité supérieur à 50 % et qu'il est contenu et stérilisé dans une gaine étanche.

Le procédé de fabrication d'un aliment pour animaux à partir de sang d'abattoir selon l'invention se caractérise essentiellement en ce que le dit sang est utilisé à l'état liquide, qu'il reçoit une proportion d'un produit conservateur anti-oxydant, qu'il est mélangé à un pourcentage d'un albuminoïde de produits alimentaires secs, tels que des céréales sous forme de farines rééquilibrées en éléments indispensables aux besoins nutritionnels tels que par exemple des vitamines, que le mélange fluide obtenu est introduit dans une gaine étanche dont l'aire est expulsé et qu'il subit une opération de cuisson et de solidification partielle et l'élimination partielle d'au moins l'un des composants excédentaires du produit conservateur anti-oxydant pour rendre le dit aliment consommable tandis que la proportion de produit conservateur maintenue permet sa stabilité bactériologique hors froid, bien que le taux d'humidité du produit fini soit élevé.

Suivant une forme préférentielle de réalisation de l'invention, le produit conservateur anti-oxydant utilisé est un bisulfite ou un métabisulfite d'un métal alcalin ou alcalinoterreux tel que par exemple de soude.

Suivant une forme préférée de réalisation, le produit albuminoïde mélangé au sang d'abattoir est une gélatine ayant subi une cuisson.

D'autres avantages et caractéristiques de l'invention apparaîtront à la lecture de la description ci-après.
Selon l'invention, il est fait usage du sang d'abattoir à l'état liquide.
Le sang doit être récolté dans les conditions prévues par les règlements sanitaires en vigueur de manière à correspondre aux critères de la qualité de sang dit alimentaire.
Simultanément à la récolte, ou immédiatement après, le sang frais subit un traitement de conservation.
A cet effet, on incorpore au sang frais un produit conservateur anti-oxydant.
Le produit conservateur anti-oxydant utilisé est de préférence un bisulfite ou un métabisulfite d'un métal alcalin ou alcalinoterreux, tel que du bisulfite de soude Na HSO3 ou du métabisulfite de soude Na SO2 05 dont le SO2 joue le rôle de conservateur.

Les proportions utilisées peuvent être les suivantes, selon une forme

- 4 -

de réalisation du procédé objet de l'invention, on incorpore au sang dans une proportion de environ 0,5 % à 3 % une solution liquide de bisulfite du commerce à 320 grammes par litre de $SO_2$, la dite proportion étant fonction de la durée de conservation souhaitée.

Suivant une autre formulation, par litre de sang frais on incorpore de 5 millilitres à trentes millilitres d'une solution de bisulfite préparée par exemple à partir de trente trois grammes de métabisulfite additionnés de soixante sept millilitres d'eau.

Il va de soi que les proportions ci-dessus ne sont données qu'à titre d'exemple et qu'elles peuvent varier plus ou moins dans un pourcentage de l'ordre de cinquante pour cent environ en fonction de la durée souhaitée de conservation.

Après le traitement de conservation, le sang est mélangé aux autres composants constitués d'un albuminoïde et d'une proportion de céréales sous forme de farines rééquilibrées en éléments nutritionnels.

Préférentiellement, l'albuminoïde en question est une gélatine, cela peut être une gélatine du commerce incorporée en l'état, cependant, dans l'optique de réalisation du produit à partir de déchets d'abattoirs, la gélatine en question est avantageusement obtenue par cuisson des couennes, pieds, mamelles et autres sources.

Selon une forme préférée de réalisation, la gélatine chaude avec son jus de cuisson, déversée dans le récipient d'une machine mélangeuse du type connu sous le nom de "cutter" reçoit l'apport des farines qui sont mélangées avec elle par hachage.

Après cette opération, le sang est mélangé avec la gélatine additionnée des farines, l'ensemble subissant un malaxage et un hachage. Il a été constaté que l'apport des farines effectué dans la gélatine chaude avant apport du sang permettait d'obtenir une bonne répartition de celles-ci dans le produit et d'éviter leur dépôt et leur concentration dans la gaine étanche.

Préférentiellement, les proportions du mélange sont de trente cinq pour cent de gélatine pour trente pour cent de sang.

Au produit sont additionnées des matières alimentaires dites sèches qui sont de préférence constituées par des céréales.

De préférence, les céréales en question sont un mélange de farine de maïs dans une proportion qui peut être de vingt pour cent et d'orge dans une proportion qui peut être de huit pour cent.

Le mélange de céréales est rééquilibré en éléments nutritionnels et en éléments destinés à rendre le produit définitif appétant.

Ces éléments sont constitués par un mélange de vitamines dans une proportion qui peut être de 0,3 % de carbonate de chaux dans une proportion qui peut être de 0,3 % de phosphate bicalcique dans une proportion qui peut être de 0,3 % de sel dans une proportion qui peut être de 0,2 % et de farine de poisson dans une proportion qui peut être de 2 %.

Après le mélange, le produit à la consistance et la fluidité d'une pâte à crêpe.

Il est par tous moyens connus de l'homme de l'art introduit dans une gaine étanche dont l'air est expulsé.

De préférence, la gaine étanche est une gaine tubulaire souple préférentiellement rétractable, en matière synthétique calibrée en fonction du poids désiré.

La gaine est à intervalles réguliers resserée, obturée par une agrafe et sectionnée en tronçons.

Lors du remplissage de la gaine par le produit ainsi obtenu, l'air est expulsé de celle-ci.

Le produit stérilisé par le conservateur anti-oxydant est soumis par cuisson à solidification et élimination partielle de au moins l'un des éléments excédentaires, le SO2, du conservateur anti-oxydant.

La cuisson dans l'enveloppe ou gaine étanche s'effectue de préférence à 85° ce qui a pour effet de cuire le produit en le solidifiant partiellement pour lui donner une consistance pâteuse.

Lors de la cuisson dans la gaine étanche, la gélatine est fondue et vient remplir les zones intersticielles du produit en chassant l'air, ce qui permet d'obtenir un résultat identique à un emballage sous vide sans utiliser la technique du vide.

La solidification partielle en cours de cuisson est essentiellement le fait de la coagulation du sang.

La solidificatio définitive intervient par refroidissement.

Au cours de la cuisson, le gaz sulfureux SO2 est détruit dans une forte proportion, ce qui ramène son taux à un niveau très inférieur au

taux légal autor... en ali...ntation animale.   **0078186**

Dans l'exemple de réalisation de l'invention tel que décrit et  défini dans les proportions, ci-dessus  énoncées, les essais effectués ont permis de constater une réduction de SO2 de l'ordre de un  à  dix  par rapport  à la proportion incorporée initialément lors du traitement du sang.

En fait, l'élimination du SO2 résiduel dans le sang  après  traitement de celui-ci et avant cuisson est presque totale.

Le temps de cuisson de l'ordre de 15 à  trente  minutes  est  en  fait fonction du calibre de la gaine utilisée.

Selon la forme préférentielle de réalisation de l'invention  donnée  à titre  d'exemple  non limitatif, la composition du produit est la suivante :

- Maïs............................   20,0 %

- Orge............................    8,0 %

- Sang............................   30,0 %

- Graisse.........................    4,0 %

- Gélatine liquide................   35,0 %

- Farine de poisson...............    2,0 %

- Carbonate de chaux..............    0,3 %

- Phosphatebicalcique.............    0,2 %

- Vitamines.......................    0,3 %

- Sel.............................    0,2 %

Cela se traduit par un aliment de base comportant 60 % de matières humides et 40 % de matières sèches dont 15 % de matières protéiques brutes et 4 % de graisse.

Compte tenu des composants du sang, le produit obtenu est proche des caractéristiques de la viande.

Il va de soi que la composition ci-dessus est une composition de base donnée à titre d'exemple non limitatif et qu'elle peut évoluer de manière à être adaptée aux différents états de l'animal (gestation, croissance, lactation) et/ou aux différentes espèces.

Compte tenu du pouvoir stabilisateur du SO2 sur le sang, le taux de matières sèches peut être réduit par exemple à 25 % par incorporation de légumes notamment.

Le taux de matières humides du produit peut être égal ou supérieur à 50 %.

Le produit obtenu à forte proportion de sang renfermant une forte proportion d'humidité peut être transporté et conservé hors froid, ce qui est partulièrement avantageux.

Le produit obtenu présente l'avantage de pouvoir être réalisé sans investissement et notamment sans recours à une chaîne de froid, ce qui est particulièrement important pour un produit qui doit être peut coûteux pour l'utilisateur.

La présente invention peut recevoir des aménagements et des variantes dans le domaine des équivalents techniques sans pour autant sortir du cadre du présent brevet.

REVENDICATIONS

1. Nouvel aliment pour animaux à tendance carnassière, tels que chiens et chats et autres animaux de compagnie, réalisé à partir de sang d'abattoir caractérisé en ce qu'il est réalisé à partir de sang liquide, que le dit sang liquide subit un traitement conservateur au moyen d'un produit anti-oxydant puis l'élimination partielle de la quantité excédentaire d'au moins l'un des éléments stabilisateur du produit anti-oxydant après adjonction d'un produit albuminoïde et de produits alimentaires sec rééquilibrés en éléments nécessaires aux besoins nutritionnels,que le dit produit présente un taux d'humidité élevé et qu'il est contenu stérile après cuisson dans une gaine étanche.

2. Procédé de fabrication d'un aliment pour animaux à partir de sang d'abattoir selon la revendication 1 caractérisé en ce que le dit sang est utilisé à l'état liquide, qu'il reçoit une proportion d'un produit conservateur anti-oxydant, qu'il est mélangé à un pourcentage d'un albuminoïde et à un pourcentage de produits alimentaires secs tels que des céréales sous forme de farines rééquilibrées en éléments indispensables aux besoins nutritionnels, tels que par exemple des vitamines, que le mélange fluide obtenu est introduit dans une gaine étanche dont l'air est expulsé, qu'il subit une opération d'élimination partielle d'au moins l'un des composants stabilisateur du produit conservateur anti-oxydant conjointement à une cuisson et à une solidification partielle, ce qui a pour effet de rendre l'aliment consommable tandis que la proportion du produit conservateur maintenue permet sa stabilité bactériologique hors froid dans la gaine étanche bien que le taux d'humidité soit élevé.

3. Procédé de fabrication d'un aliment pour animaux selon la revendication 2 caractérisé en ce que le produit conservateur anti-oxydant utilisé est un bisulfite ou métabisulfite de métalalcalin ou alcalinoterreux.

4. Procédé de fabrication selon la revendication précédente caractérisé en ce que le bisulfite ou métabisulfite employé est un bisulfite ou métabiusulfite de soude.

**0078186**

5. Procédé selon la revendication 1 et les revendications 2 et 3 caractérisé en ce que le composant stabilisateur partiellement éliminé est un gaz sulfureux de formule SO 2.

6. Procédé selon les revendications 2 et 3 caractérisé en ce que le SO 2 du produit conservateur est détruit par la cuisson.

7. Procédé selon la revendication 2 caractérisé en ce que le produit albuminoïde mélangé au sang d'abattoir est une gélatine.

8. Procédé selon la revendication 2 caractérisé en ce qu'au cours de cuisson, la gélatine fondue envahit les espaces intersticiels tandis que la coagulation du sang durcit le produit dans sa gaine dont l'air est expulsé.

9. Procédé selon la revendication 2 caractérisé en ce que à la gélatine chaude sont incorporés dans l'ordre, les farines puis le sang traité.

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | --- <br> GB-A- 103 433 (MIDLAND CATTLE PRODUCTS) <br> * En entier * | 1,2,9 | A 23 K 1/04 <br> A 23 K 1/18 <br> A 23 J 3/00 |
| A | --- <br> GB-A-1 153 135 (PETFOODS LTD.) <br> * Revendications 1,11,14,17-20 * | 1,2,9 | |
| A | --- <br> FR-A-2 467 550 (R.A. JULIEN) <br> * Revendications 1,2 * | 1,7 | |
| A | --- <br> FR-A-2 452 255 (STE. INTER MEX-EUROPE SARL ET ENRIQUE GONZALES-SICILIA-MORENO) <br> * Page 3, alinéa 4; page 4, alinéas 1-3 * | 1,3-5 | |
| A | --- <br> CHEMICAL ABSTRACTS, vol. 78, no. 25, 25 juin 1973, page 297, no. 158044n, Columbus, Ohio, USA <br> & CS - A - 145 897 (J. VRCHLABSKY et al.) 15-10-1972 * Abrégé * | 3,4 | **DOMAINES TECHNIQUES RECHERCHES (Int. Cl. 3)** <br><br> A 23 K <br> A 23 J |
| A | --- <br> CHEMICAL ABSTRACTS, vol. 72, no. 15, 13 avril 1970, page 267, no. 77633c, Columbus, Ohio, USA <br> J. VRCHLABSKY: "Chemical preservation of blood intended as feed" & FLEISCHWIRTSCHAFT 1969, 49(11), 1489-1492, 1495 * Abrégé * | 3,4 | |
| | ---      -/- | | |

Le présent rapport de recherche a été établi pour toutes les revendications

| Lieu de la recherche | Date d'achèvement de la recherche | Examinateur |
|---|---|---|
| LA HAYE | 11-01-1983 | GALLIGANI L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

**Office européen des brevets**

**RAPPORT DE RECHERCHE EUROPEENNE**

| | DOCUMENTS CONSIDERES COMME PERTINENTS | | | Page 2 |
|---|---|---|---|---|
| Catégorie | Citation du document avec indication, en cas de besoin, des parties pertinentes | Revendication concernée | CLASSEMENT DE LA DEMANDE (Int. Cl. ³) | |
| A | FR-A-2 247 166 (CENTRE TECHNIQUE DU CUIR) <br> * Revendications 1,3,6 * <br><br> ----- | 3,4,7 | | |

DOMAINES TECHNIQUES RECHERCHES (Int. Cl. ³)

Le présent rapport de recherche a été établi pour toutes les revendications

| Lieu de la recherche | Date d'achèvement de la recherche | Examinateur |
|---|---|---|
| LA HAYE | 11-01-1983 | GALLIGANI L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82